# EUROPEAN PATENT SPECIFICATION

(11) **EP 2 124 496 B1**
(45) Date of publication and mention of the grant of the patent: **29.01.2014**
(21) Application number: 09011613.8
(22) Date of filing: 05.11.1999
(51) Int. Cl.: H04W 28/18

(54) **Apparatus and methods for adapting mobile unit to wireless LAN**
Verfahren und Vorrichtung zur Anpassung einer mobilen Einheit zu einem drahtlosen lokalen Netzwerk
Appareil et procédé pour adapter une unité mobile à un réseau local sans fil

(43) Date of publication of application: 25.11.2009
(62) Divisional of application: 99122158.1
(73) Proprietor: Symbol Technologies, Inc., Holtsville, NY 11742-1300 (US)
(72) Inventor: Hughes, John, San Jose, CA 95126 (US); Singh, Gurpreet, San Jose, CA 95121 (US)
(74) Representative: Treleven, Colin

(56) References cited:
- EP-A- 0 779 752
- EP-A- 0 893 930
- EP-A- 0 939 566
- GB-A- 2 308 946
- US-A- 5 579 373
- US-A- 5 613 204
- US-A- 5 900 838
- US-A- 5 930 710

## Description

### BACKGROUND OF THE INVENTION

### 1. Field of the Invention

The invention relates to data communication systems, and more particularly to a wireless local area network (LAN) communication system in which mobile units associate with stationary access points having communications characteristics defined by the particular country in which the is installed.

### 2. The Background Art

A wireless LAN may be implemented by remote mobile units (mobile units) that send messages to and receive messages from base stations or Stationary Access Points (Stationary Access Points) using wireless infrared or radio communication links. Each Stationary Access Point covers a limited area, so a typical network may have several Stationary Access Points.

One protocol that may be used is the IEEE 802.11 Standard which is a standard that defines physical and data link layers for wireless local networks. The standard defines, among other things, the wireless LAN medium access control (MAC) and physical (PHY) layer specifications.

For a message to be transmitted, a mobile unit first becomes associated with an Stationary Access Point. Association refers to the process of synchronizing a mobile unit with an Stationary Access Point for communication, and is initiated by the mobile unit. The mobile unit first listens to the broadcasts over the airwaves and determines which Stationary Access Points are within range of the mobile unit, and then requests association with a particular Stationary Access Point according to certain criteria. At any point in time, a mobile unit is typically associated with only one Stationary Access Point. A single Stationary Access Point can be associated with multiple mobile units.

US-A-5,930,710 discloses a control/pilot channel reselection between cells belonging to different registration areas. In a TDMA or CDMA cellular telephone network including a plurality of registration areas, and in instances of mobile station cell re-selection between a cell located in a first registration area and a cell located in a second registration area, the mobile station processes control or pilot channel signal strength measurements in view of both a conventional reselection hysteresis and an additional registration hysteresis. Reselection is performed by the mobile station when the control or pilot channel signal strength measured with respect to the second registration area cell exceeds the control or pilot channel signal strength measured with respect to the first registration area cell by the sum total of both the reselection hysteresis and the registration hysteresis. This makes it more difficult to obtain an inter-registration area cell reselection to the benefit of minimizing the likelihood of incurring unnecessary consumption of valuable cellular air interface and system resources due to mobile station transit back and forth between the two registration areas.

US-A-5,613,204 discloses a beacon system for roaming cellular stations. A cellular telephone system is upgraded by modifying subscriber units for selective service provider acquisition-during roaming. Priority of acquisition is given to those service providers associated with the home service provider. These preferred service providers are identified by System Identification (SIDs) numbers. A roaming subscriber unit will tune to a single broadcast frequency to identify available system providers operating in a physical area to which the subscriber has roamed.

GB-A-2 308 946 discloses channel allocation for registering in a cellular radio network. A mobile unit for use in a cellular radio network which includes apparatus for registering the mobile unit with a radio channel. The mobile unit includes means for storing data relating to the frequencies of radio channels operated by base sites in the network and to the geographical areas in which the mobile units are capable of using each radio channel. A location system is used to determine the current position of the mobile unit in the network. A comparing means compares the current position of the mobile unit with the stored geographical data and a selecting means selects a radio channel frequency for registration in dependence on the comparison.

US-A-5,579,373 discloses a transmission power control method in a cellular radiotelephone system that includes, within at least one cell site, first and second stations, each having a transmitter and a receiver for a predetermined radio channel, and dynamically adjusts transmission power levels, comprising the steps of forming location groups by dividing radio channels within the cell site around the first station into a plurality of groups which are from lowest group to highest group, measuring, in the first station, levels of signals received from the second station, allotting the second station to a location group corresponding to the measured signal level, assigning an idle traffic channel to the second station by checking traffic channels according to a location group of the second station, determining a normal operation state in case of being within a level range, a power decrease requiring state in case of being over a maximum value of level range, and a power increase requiring state in case of being below a minimum value of level range, by comparing a signal level received from the first station and measured in the second station with the level range received and determined in the first station, decreasing a transmission power of the second station by the determination of the power decrease requiring state to allot the second station to a lower location group and checking traffic channels according to the location group to decrease a transmission power of the first station when there is no idle channel, and increasing a transmission power of the second station by the determination of the power increase requiring state to allot the second station to a higher location group and checking traffic channels according to the location group to increase a transmission power of the first station when there is no idle channel.

EP-A-0 939 566 discloses a signal transmission method and a base station device for mobile communications. A signal transmission method checks, when detecting an occurrence of a communication request, whether the communication request is a high speed communication. In the case of the high speed communication, it checks whether the number of current high speed communications (m) plus one is greater than the upper limit (mmax) of the high speed communication. If greater, it cancels the request as a call loss, and sets to a variable a the ratio (h) of the rate of the high speed communication to that of a low speed communication. If the communication request is the low speed communication, it sets one to the variable a. It compares n plus a with nmax, where n is the total number of all the current communications, a is the value associated with the communication request, and nmax is the upper limit of the number of communications acceptable in a bandwidth, all of which are expressed in terms of the number of the low speed communications. If n plus a is greater than nmax, the communication request is canceled as a call loss. Otherwise, the total number of the current high speed communications (m) and the total number of all the current communications (n) expressed in terms of the number of the low speed communications are updated, and a channel is assigned to the communication request.

US-A-5,905,955 discloses a method for selecting a wireless service provider in a multiservice provider environment using a geographic database, where a communication device tunes to a frequency band and receives a geographic identifier from the service provider, where the received geographic identifier is compared to a listing of stored geographic identifiers, where each of the stored geographic identifiers are associated with a desirable frequency band, and where a frequency band is selected on the basis of the match.

With the ever-growing global market, it is common for users to travel from country to country. A problem therefore occurs, in that one country may allocate a different portion of the frequency spectrum to wireless communications than another country. Additionally, different countries may have different regulations regarding power output of wireless communications. These allocations and regulations may prevent a mobile unit which is designed for use in one country from working (or being allowed to work) in another country.

What is needed, then, is a system and method for allowing a mobile unit to meet regulatory requirements and adapt to and communicate with Stationary Access Points having different communication characteristics.

### BRIEF DESCRIPTION OF THE INVENTION

The present invention relates to an apparatus and method for automatically adapting a mobile unit to communication requirements of a particular country or geographic region. To achieve this capability, the invention provides a mobile unit as well as a method for use in a mobile unit as set forth in claims 1 and 9, respectively. Preferred embodiments of the present invention may be gathered from the dependent claims. BRIEF DESCRIPTION OF THE DRAWING FIGURES
FIG. 1 is a block diagram showing a wireless network architecture.
FIG. 2 is a flow diagram illustrating a method for operating a wireless data communications network according to a presently preferred embodiment of the present invention.

### DETAILED DESCRIPTION OF THE OF INVENTION

Those of ordinary skill in the art will realize that the following description of the present invention is illustrative only and not in any way limiting. Other embodiments of the invention will readily suggest themselves to such skilled persons.

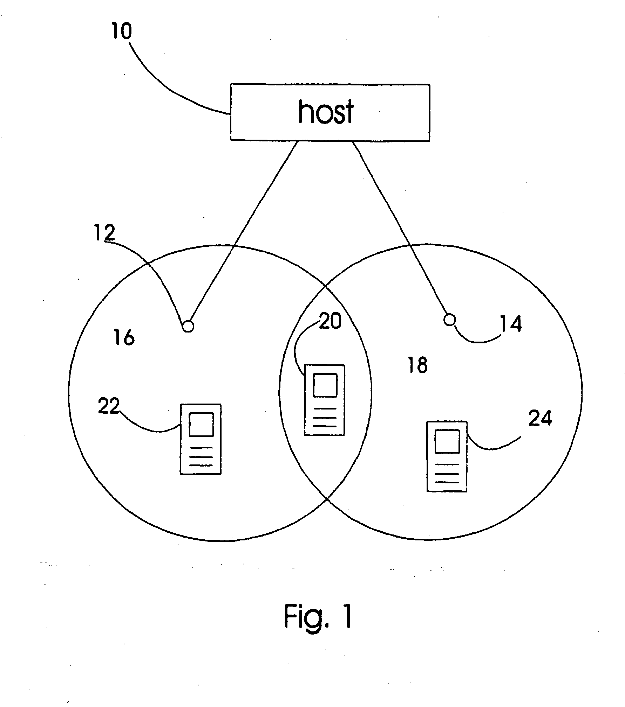

FIG. 1 is a block diagram showing a wireless network architecture. Host 10 is connected to Stationary Access Point 12 and Stationary Access Point 14. Stationary Access Point 12 handles wireless communications within area 16, and Stationary Access Point 14 handles communications within area 18. As shown in FIG. 1, therefore, Stationary Access Point 12 is in communication range of mobile unit 20 and mobile unit 22, and Stationary Access Point 14 is in communication range of mobile unit 20 and mobile unit 24. Mobile unit 20 is in communication range of either Stationary Access Point 12 or Stationary Access Point 14, although mobile unit 20 preferably only communicates with one of them at a time.

In one scenario, mobile unit 20 associates with an Stationary Access Point, for example Stationary Access Point 12, and thereafter communicates with Stationary Access Point 12 to transmit messages to the host or to other mobile units. If mobile unit 20 is associated with Stationary Access Point 12, mobile unit 20 could transmit a message to mobile unit 22 via Stationary Access Point 12, or to mobile unit 24 via Stationary Access Point 12, host 10, and Stationary Access Point 14.

In a preferred embodiment of the invention, a grouping of hosts and/or mobile units make up a wireless local area network (LAN).

Systems similar to the one depicted in FIG. 1 are found throughout the world. Each system, however, typically has different operating parameters in each country.

According to a preferred embodiment of the present invention, a mobile unit is designed which may operate at a variety of different frequencies. The range of frequencies should be large enough to encompass some of the frequencies available for wireless communications in each country or geographic region in which the mobile unit may operate. Additionally, the mobile unit is designed to operate at a variety of different power settings, again with the range of power settings large enough to encompass at least some allowable power settings in each country in which the mobile unit may operate. These features allow the mobile unit to operate in a variety of different countries or geographic regions.

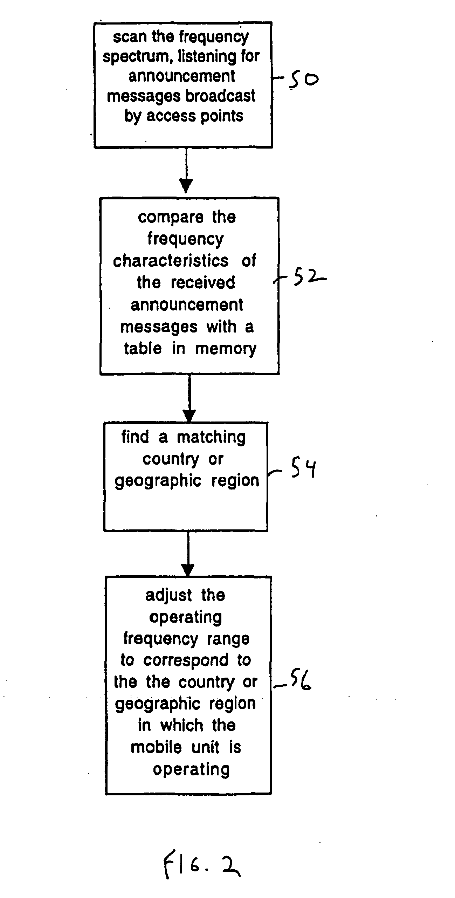

Furthermore, the mobile unit is designed to automatically configure itself for use in individual countries or geographic regions. This may be accomplished by running a program or method contained in either software or hardware within the mobile unit. FIG. 2 is a flow diagram illustrating the method according to a preferred embodiment of the present invention. At step 50, the mobile unit scans the frequency spectrum, listening for announcement messages broadcast by access points. This may encompass tuning to each available frequency an announcement message from a nearby access point is received. The announcement message will have a frequency characteristic that is unique to a particular geographic region or country.

At step 52, the frequency characteristics of the received announcement message are compared with a table or equivalent data structure contained in memory. The table may contain a listing of the breakdown of the frequency spectrum for all the different available countries or geographic regions. It also may list regulations on power output or other regulations important to the functioning of the mobile unit. At step 54, a matching country or geographic region is found. At this point, the mobile unit has determined what country or geographic region in which it is operating. At step 56, the mobile unit adjusts its operating frequency range to correspond to the country or geographic region in which it is operating. It may also alter other operating characteristics, such as power output and modulation type, in accordance with the regulations listed in the table or other data structure corresponding to the country in which the unit is located.

After the geographic region frequency and power settings (and any other operating characteristics) have been adapted for use in the country or geographic region in which the unit is located, the mobile unit operates similarly to a conventional mobile unit. '

Some regulations require that the regulations themselves be displayed to the user. Normally, these regulations would be placed on the outer surface of a unit capable of transmitting in the country. However, since the unit of the present invention may be capable of transmission in many different countries, this may not be feasible. Therefore, the unit may be configured such that, after the unit has determined the country in which it is located, the proper regulatory information is displayed to the user.

Referring back to FIG. 1, Stationary Access Point 12, Stationary Access Point 14, and host 10 may be implemented in hardware or software or a combination of hardware and software. Mobile unit 22, mobile unit 20 and mobile unit 24 may be implemented as programmable processor-based units executing software modules. An embodiment of the process performed by the software modules is described below. In one embodiment, mobile units 20, 22 and 24 are hand-held data-gathering units.

US-A-5,029,183 and US-A-5,668,803 show systems in which methods and apparatus consistent with the principles of the present invention may be practiced. Each patent describes a system in which hand-held data-gathering mobile units communicate via wireless link with Stationary Access Points, similar to the system shown in FIG. 1.

In another embodiment of the present invention, the mobile unit may be configured so that the user must verify the country in which they are located. For example, if the mobile unit determines through looking at the table that it is currently located in Switzerland, a message may appear on a display screen on the mobile unit saying "You are in Switzerland. Is this correct? (Y/N)". The user may then be required to confirm that they are indeed in Switzerland before the mobile unit reconfigures its settings to comply with Swiss standards. This reduces the chance of the unit mistakenly configuring itself to specific characteristics which may violate certain regulations.

In another embodiment of the present invention, a Global Positioning System (GPS) locator may be built into the mobile unit, allowing the unit to verify its location instead of or in addition to requiring confirmation from the user. This feature also reduces the chance of the unit mistakenly configuring itself to specific characteristics which may violate certain regulations.

In another embodiment of the present invention, the multiple geographic region feature (the feature embodied by the above methods) may be enabled or disabled by a user. When the feature is disabled, the mobile unit merely attempts to establish communication using a communication setting for a particular geographic region. This setting may be, for example, a default setting or the setting in use at the time the mobile unit was last turned off.

While embodiments and applications of this invention have been shown and described, it would be apparent to those skilled in the art that many more modifications than mentioned above are possible without departing from the inventive concepts herein. The invention, therefore, is not to be restricted except within the scope of the appended claims.

## Claims

1. A mobile unit (20, 22, 24) for use in wireless local area networks of particular geographic regions, the mobile unit comprising circuitry configured to:
scan (50) a frequency spectrum of the wireless local area networks to listen for an announcement message from an access point (12, 14), the announcement message including a unique frequency characteristic associated with the geographic region of the access point from which it was sent;
compare (52) the unique frequency characteristic of the message with a table listing the frequency spectrum for all geographic regions, the table also containing regulations of allowable frequency sets of the geographic regions;
match (54) the unique frequency characteristic to a geographic region in the table; and
adjust (56) an operating frequency range to correspond to that geographic region's regulations based on information specific to the geographic region in the table.

2. The mobile unit (20, 22, 24) of claim 1, wherein the mobile unit is handheld, and the mobile unit comprises wireless-network-interface resources comprising the circuitry.

3. The mobile unit (20, 22, 24) of claim 1, wherein the mobile unit is a desktop personal computer having wireless-network-interface resources comprising the circuitry.

4. The mobile unit (20, 22, 24) of claim 1, wherein the circuitry that is configured to scan is configured to scan frequencies for a broadcast transmission.

5. The mobile unit (20, 22, 24) of claim 4, wherein the circuitry that is configured to scan is configured to scan for the broadcast transmission when the mobile unit seeks to associate with a new access point.

6. The mobile unit (20, 22, 24) of claim 1, for use in wireless local area networks in which an access point comprises a transmitter, wherein:
the circuitry that is configured to scan is configured to scan available frequencies to receive a broadcast transmission when seeking to associate with a new access point; and
the circuitry is configured to receive the broadcast transmission on one of the frequencies.

7. The mobile unit (20, 22, 24) of claim 1, wherein the circuitry is configured to store information specific to the geographic region on that geographic region's regulations in a table for the transmitter.

8. The mobile unit (20, 22, 24) of claim 7, wherein the circuitry is configured to:
be operable on a plurality of frequencies; and
receive information specific to a geographic region on a particular subset of the plurality of frequencies on which wireless local area networks in that geographic region are to operate.

9. A method for use in a mobile unit (20, 22, 24) for use in wireless local area networks of particular geographic regions, the method comprising:
scanning (50) a frequency spectrum of the wireless local area networks to listen for an announcement message from an access point (12, 14), the announcement message including a unique frequency characteristic associated with the geographic region of the access point from which it was sent;
comparing (52) the unique frequency characteristic of the message with a table listing the frequency spectrum for all geographic regions, the table also containing regulations of allowable frequency sets of the geographic regions;
matching (54) the unique frequency characteristic to a geographic region in the table; and
adjusting (56) an operating frequency range to correspond to that geographic region's regulations based on information specific to the geographic region in the table.

10. The method of claim 9, wherein the mobile unit is handheld and the altering occurs at the mobile unit.

11. The method of claim 9, wherein:
the scanning comprises scanning to receive a broadcast transmission from an access point when seeking to associate with a new access point.

12. The method of claim 11, wherein:
the scanning comprises scanning available frequencies to receive the broadcast transmission on one of the frequencies.

13. The method of claim 9, further comprising including a database of regulations for all geographic regions in the table.

14. The method of claim 13, wherein the regulations include information on a particular set of available frequencies on which wireless local area networks in that geographic region are to operate.

15. The method of claim 14, comprising:
using a plurality of frequencies to communicate in different geographic regions; and
the information specific to the geographic region includes information on a particular subset of the plurality of frequencies on which wireless local area networks in that geographic region are to operate.

## Patentansprüche

1. Mobile Einheit (20, 22, 24) zur Verwendung in drahtlosen lokalen Netzen von bestimmten geographischen Gebieten, wobei die mobile Einheit eine Schaltung umfasst, die konfiguriert ist, um:
ein Frequenzspektrum des drahtlosen lokalen Netzes abzutasten (50), um nach einer Ankündigungsnachricht von einem Zugriffspunkt (12, 14) zu lauschen, wobei die Ankündigungsnachricht ein eindeutiges Frequenzmerkmal umfasst, das mit dem geographischen Gebiet des Zugriffspunktes verknüpft ist, von dem sie gesendet wurde;
das eindeutige Frequenzmerkmal der Nachricht mit einer Tabelle zu vergleichen (52), die das Frequenzspektrum für alle geographischen Gebiete auflistet, wobei die Tabelle außerdem Bestimmungen von erlaubten Frequenzsätzen der geographischen Gebiete enthält;
das eindeutige Frequenzmerkmal mit einem geographischen Gebiet in der Tabelle zu paaren (54); und
einen Betriebsfrequenzbereich so einzustellen (56), dass er den Bestimmungen des geographischen Gebietes entspricht, basierend auf Informationen, die für die geographischen Gebiete in der Tabelle spezifisch sind.

2. Mobile Einheit (20, 22, 24) gemäß Anspruch 1, wobei die mobile Einheit in der Hand gehalten wird und die mobile Einheit Drahtlosnetzwerkschnittstellenressourcen umfasst, die die Schaltung umfassen.

3. Mobile Einheit (20, 22, 24) gemäß Anspruch 1, wobei die mobile Einheit ein Arbeitsplatzrechner ist, der Drahtlosnetzwerkschnittstellenressourcen umfasst, die die Schaltung umfassen.

4. Mobile Einheit (20, 22, 24) gemäß Anspruch 1, wobei die Schaltung, die konfiguriert ist, um abzutasten, konfiguriert ist, um Frequenzen für eine Rundfunkübertragung abzutasten.

5. Mobile Einheit (20, 22, 24) gemäß Anspruch 4, wobei die Schaltung, die konfiguriert ist, um abzutasten, konfiguriert ist, um für die Rundfunkübertragung abzutasten, wenn sich die mobile Einheit bemüht, sich mit einem neuen Zugriffspunkt zu verknüpfen.

6. Mobile Einheit (20, 22, 24) gemäß Anspruch 1 zur Verwendung in drahtlosen lokalen Netzen, in denen ein Zugriffspunkt einen Sender umfasst, wobei:
die Schaltung, die konfiguriert ist, um abzutasten, konfiguriert ist, um verfügbare Frequenzen abzutasten, um eine Rundfunkübertragung zu empfangen, wenn sie sich darum bemüht, sich mit einem neuen Zugriffspunkt zu verknüpfen; und
die Schaltung konfiguriert ist, um die Rundfunkübertragung auf einer der Frequenzen zu empfangen.

7. Mobile Einheit (20, 22, 24) gemäß Anspruch 1, wobei die Schaltung konfiguriert ist, um Informationen, die für das geographische Gebiet spezifisch sind, über Bestimmungen dieses geographischen Gebietes, in einer Tabelle für den Sender zu speichern.

8. Mobile Einheit (20, 22, 24) gemäß Anspruch 7, wobei die Schaltung konfiguriert ist, um:
auf einer Mehrzahl von Frequenzen betreibbar zu sein; und
Informationen zu empfangen, die für ein geographisches Gebiet spezifisch sind, über eine bestimmte Teilmenge von der Mehrzahl von Frequenzen, auf denen drahtlose lokale Netze in diesem geographischen Gebiet arbeiten.

9. Verfahren zur Verwendung in einer mobilen Einheit (20, 22, 24) zur Verwendung in drahtlosen lokalen Netzen von bestimmten geographischen Gebieten, wobei das Verfahren umfasst:
Abtasten (50) eines Frequenzspektrums des drahtlosen Netzes, um nach einer Ankündigungsnachricht von einem Zugriffspunkt (12, 14) zu lauschen, wobei die Ankündigungsnachricht ein eindeutiges Frequenzmerkmal umfasst, das mit dem geographischen Gebiet des Zugriffspunktes verknüpft ist, von dem sie gesendet wurde;
Vergleichen (52) des eindeutigen Frequenzmerkmals der Nachricht mit einer Tabelle, die das Frequenzspektrum für alle geographischen Gebiete auflistet, wobei die Tabelle außerdem Bestimmungen von erlaubten Frequenzsätzen der geographischen Gebiete enthält;
Paaren (54) des eindeutigen Frequenzmerkmals mit einem geographischen Gebiet in der Tabelle; und
Einstellen (56) eines Betriebsfrequenzbereichs, sodass er den Bestimmungen des geographischen Gebietes entspricht, basierend auf Informationen, die für die geographischen Gebiete in der Tabelle spezifisch sind.

10. Verfahren gemäß Anspruch 9, wobei die mobile Einheit in der Hand gehalten wird und das Verändern bei der mobilen Einheit stattfindet.

11. Verfahren gemäß Anspruch 9, wobei:
das Abtasten umfasst: Abtasten, um eine Rundfunkübertragung von einem Zugriffspunkt zu empfangen, wenn sich bemüht wird, sich mit einem neuen Zugriffspunkt zu verknüpfen.

12. Verfahren gemäß Anspruch 11, wobei:
das Abtasten umfasst: Abtasten verfügbarer Frequenzen, um die Funkfunkübertragung auf einer der Frequenzen zu empfangen.

13. Verfahren gemäß Anspruch 9, das weiterhin umfasst:
Umfassen einer Datenbank über Bestimmungen für alle geographischen Gebiete in der Tabelle.

14. Verfahren gemäß Anspruch 13, wobei die Bestimmungen Informationen über einen bestimmten Satz von verfügbaren Frequenzen umfassen, auf denen drahtlose lokale Netze in diesem geographischen Gebiet arbeiten.

15. Verfahren gemäß Anspruch 14, das umfasst:
Verwenden einer Mehrzahl von Frequenzen, um in verschiedenen geographischen Gebieten zu kommunizieren; und
dass die Informationen, die für das geographische Gebiet spezifisch sind, Informationen über eine bestimmte Teilmenge von der Mehrzahl von Frequenzen umfassen, auf denen drahtlose lokale Netze in diesem geographischen Gebiet arbeiten.

## Revendications

1. Poste mobile (20, 22, 24) pour utilisation dans des réseaux locaux sans fil de régions géographiques particulières, le poste mobile comprenant un ensemble de circuits configuré pour :
balayer (50) un spectre de fréquences des réseaux locaux sans fil pour guetter un message d'annonce en provenance d'un point d'accès (12, 14), le message d'annonce comprenant une caractéristique de fréquence spécifique associée à la région géographique du point d'accès à partir duquel il a été envoyé ;
comparer (52) la caractéristique de fréquence spécifique du message à une table listant le spectre de fréquences pour toutes les régions géographiques, la table contenant également des réglementations d'ensembles de fréquences autorisés des régions géographiques ;
faire concorder (54) la caractéristique de fréquence spécifique avec une région géographique de la table ; et
régler (56) une plage de fréquences de fonctionnement pour correspondre aux réglementations de cette région géographique sur la base d'informations propres à la région géographique de la table.

2. Poste mobile (20, 22, 24) selon la revendication 1, dans lequel le poste mobile est tenu à la main, et le poste mobile comprend des ressources d'interface de réseau sans fil comprenant l'ensemble de circuits.

3. Poste mobile (20, 22, 24) selon la revendication 1, dans lequel le poste mobile est un ordinateur personnel de bureau ayant des ressources d'interface de réseau sans fil comprenant l'ensemble de circuits.

4. Poste mobile (20, 22, 24) selon la revendication 1, dans lequel l'ensemble de circuits qui est configuré pour balayer est configuré pour balayer des fréquences pour une émission de diffusion.

5. Poste mobile (20, 22, 24) selon la revendication 4, dans lequel l'ensemble de circuits qui est configuré pour balayer est configuré pour balayer pour l'émission de diffusion lorsque le poste mobile cherche à s'associer à un nouveau point d'accès.

6. Poste mobile (20, 22, 24) selon la revendication 1, pour utilisation dans des réseaux locaux sans fil dans lesquels un point d'accès comprend un émetteur, dans lequel :
l'ensemble de circuits qui est configuré pour balayer est configuré pour balayer des fréquences disponibles pour recevoir une émission de diffusion lorsque l'on cherche à s'associer à un nouveau point d'accès ; et
l'ensemble de circuits est configuré pour recevoir l'émission de diffusion sur une des fréquences.

7. Poste mobile (20, 22, 24) selon la revendication 1, dans lequel l'ensemble de circuits est configuré pour stocker des informations propres à la région géographique sur les réglementations de cette région géographique dans une table pour l'émetteur.

8. Poste mobile (20, 22, 24) selon la revendication 7, dans lequel l'ensemble de circuits est configuré pour :
pouvoir fonctionner sur une pluralité de fréquences ; et
recevoir des informations propres à une région géographique sur un sous-ensemble particulier de la pluralité de fréquences sur lesquelles des réseaux locaux sans fil dans cette région géographique doivent fonctionner.

9. Procédé destiné à être utilisé dans un poste mobile (20, 22, 24) pour utilisation dans des réseaux locaux sans fil de régions géographique particulières, le procédé comprenant :
le balayage (50) d'un spectre de fréquences des réseaux locaux sans fil pour guetter un message d'annonce en provenance d'un point d'accès (12, 14), le message d'annonce comprenant une caractéristique de fréquence spécifique associée à la région géographique du point d'accès à partir duquel il a été envoyé ;
la comparaison (52) de la caractéristique de fréquence spécifique du message à une table listant le spectre de fréquences pour toutes les régions géographiques, la table contenant également des réglementations d'ensembles de fréquences autorisés des régions géographiques ;
la mise en concordance (54) de la caractéristique de fréquence spécifique avec une région géographique de la table ; et
le réglage (56) d'une plage de fréquences de fonctionnement pour correspondre aux réglementations de cette région géographique sur la base d'informations propres à la région géographique de la table.

10. Procédé selon la revendication 9, dans lequel le poste mobile est tenu à la main et la modification se produit au niveau du poste mobile.

11. Procédé selon la revendication 9, dans lequel :
le balayage comprend un balayage pour recevoir une émission de diffusion en provenance d'un point d'accès lorsque l'on cherche à s'associer à un nouveau point d'accès.

12. Procédé selon la revendication 11, dans lequel :
le balayage comprend un balayage de fréquences disponibles pour recevoir l'émission de diffusion sur une des fréquences.

13. Procédé selon la revendication 9, comprenant en outre l'inclusion d'une base de données de réglementations pour toutes les régions géographiques dans la table.

14. Procédé selon la revendication 13, dans lequel les réglementations comprennent des informations sur un ensemble particulier de fréquences disponibles sur lesquelles des réseaux locaux sans fil dans cette région géographique doivent fonctionner.

15. Procédé selon la revendication 14, comprenant :
l'utilisation d'une pluralité de fréquences pour communiquer dans différentes régions géographiques ; et
les informations propres à la région géographique comprennent des informations sur un sous-ensemble particulier de la pluralité de fréquences sur lesquelles des réseaux locaux sans fil dans cette région géographique doivent fonctionner.
